(19) Europäisches Patentamt
European Patent Office
Office européen des brevets

(11) **EP 4 369 854 A1**

(12) **EUROPEAN PATENT APPLICATION**

(43) Date of publication:
**15.05.2024 Bulletin 2024/20**

(51) International Patent Classification (IPC):
**H04W 84/02** (2009.01)      **H04W 28/08** (2023.01)

(21) Application number: **23208994.6**

(52) Cooperative Patent Classification (CPC):
**H04W 84/02; H04W 28/08**

(22) Date of filing: **10.11.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 US 202217985003**

(71) Applicant: **Avago Technologies International Sales Pte. Limited Singapore 768923 (SG)**

(72) Inventors:
- **SINGHAL, Kamal Agarwal Bangalore (IN)**
- **AMBAR, Swetank Bangalore (IN)**
- **BHUKANIA, Bijoy Bangalore (IN)**
- **JAVVADI, Varaprasad Bangalore (IN)**

(74) Representative: **Dilg, Haeusler, Schindelmann Patentanwaltsgesellschaft mbH Leonrodstraße 58 80636 München (DE)**

(54) **LINK SELECTION FOR NON-SIMULTANEOUS TRANSMIT RECEIVE (NSTR)**

(57) Systems and methods are provided for improved non-simultaneous transmit receive (NSTR) communication. In one or more implementations, improved NSTR communication can be achieved, at least in part, by determining which of multiple links on which to transmit data, at least in part, by comparing a rate ratio to a threshold that is based on an expected wait time for backoff, a maximum transmission time for the multiple links, and/or an overhead for transmission one or more of the links.

500

WIRELESSLY TRANSMIT DATA, BY A DEVICE, OVER A FIRST LINK AND NOT OVER A SECOND LINK DURING A FIRST PERIOD OF TIME DURING WHICH A RATIO OF A FIRST DATA RATE FOR THE FIRST LINK TO A SECOND DATA RATE FOR THE SECOND LINK IS ABOVE A THRESHOLD — 502

WIRELESSLY TRANSMIT DATA, BY A DEVICE, CONCURRENTLY OVER THE FIRST LINK AND THE SECOND LINK DURING A SECOND PERIOD OF TIME DURING WHICH THE RATIO IS BELOW THE THRESHOLD — 504

*FIG. 5*

EP 4 369 854 A1

**Description**

**TECHNICAL FIELD**

The subject application relates generally to network communication including, for example, wireless local area network communication.

**BACKGROUND**

Wireless local area network (WLAN) devices communicate with one another over wireless links. WLAN devices may be multi-link devices with multiple radios and media access control functions (MACs) to operate over multiple wireless links. Multi-link devices can operate in a non-simultaneous transmit and receive (NSTR) mode in which the multi-link device can concurrently transmit over multiple links or concurrently receive over multiple links, but not concurrently transmit and receive over the multiple links.

**BRIEF DESCRIPTION OF THE DRAWINGS**

Certain features of the subject technology are set forth in the appended claims. However, for purpose of explanation, several embodiments of the subject technology are set forth in the following figures.

FIG. 1 illustrates an example network environment in which wireless communication may be implemented in accordance with aspects of the subject technology.

FIG. 2 is a block diagram illustrating components of an electronic device with which aspects of the subject technology can be implemented.

FIG. 3 illustrates an example use case in which an electronic device communicates with another electronic device, such as an access point, over multiple links in accordance with aspects of the subject technology.

FIG. 4 illustrates a virtual timeline in accordance with aspects of the subject technology.

FIG. 5 illustrates a flowchart of illustrative operations that may be performed for wireless communication in accordance with aspects of the subject technology.

FIG. 6 is a block diagram illustrating components of an electronic system with which one or more implementations of the subject technology may be implemented.

**DETAILED DESCRIPTION**

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring concepts of the subject technology.

Non-simultaneous transmit and receive (NSTR) operation of a multi-link device over multiple wireless links can facilitate medium access and reduce latency, particularly when the multiple wireless links have similar bandwidths and/or throughputs. However, NSTR operation does not take the capacities of the two links into consideration when selecting links for data transmission. Accordingly, in some use cases (e.g., in which the multiple wireless links have very different bandwidths and/or throughputs), NSTR operation can cause a throughput degradation relative to a single link operation.

For example, in a use case in which a device has been transmitting and/or receiving data at a rate of 5 Gbps over a first link (e.g., in a WiFi band at a frequency of 5.9 GHz) having a 320 MHz bandwidth and transmitting and/or receiving data at a rate of 300 Mbps over a second link (e.g., in a WiFi band at a frequency of 2.4 GHz, 5 GHz, or 5.9 GHz) having a 20 MHz bandwidth, NSTR operation may transmit half of the data from the device over the first link and half of the data from the device over the second link. In this example use case, the effective data rate for transmission from the device is 2650 Mbps, which is less than would have been achieved if the data had all been transmitted over the first link at 5 Gbps.

Aspects of the subject technology can provide improved throughput for NSTR devices (e.g., multi-link devices configured for NSTR operation), by transmitting data solely over a first link during periods of time when the first link has a data rate that is greater, by a threshold amount, than a data rate of a second link. As discussed in further detail hereinafter, in one or more implementations, the threshold may be based on a wait time for the first link and/or based on an amount of overhead data for transmissions over the first link.

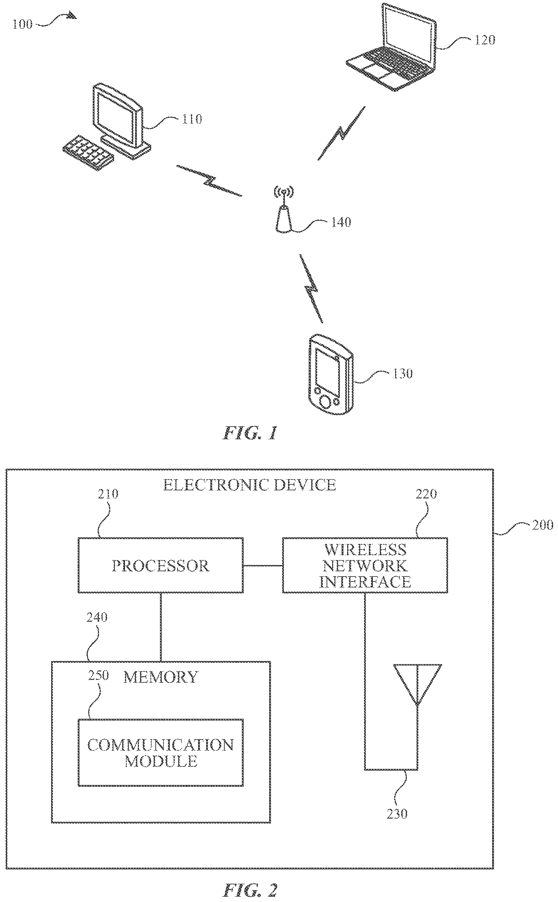

FIG. 1 illustrates an example network environment in which wireless communication may be implemented in accordance with aspects of the subject technology. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

As depicted in FIG. 1, network environment 100 includes electronic devices 110, 120, 130, and 140. Electronic device 140 may be a base station or an access point that is configured to establish wireless connections with one or more of electronic device 110, 120, and 130, as part of a wireless local area network (WLAN). In addition, electronic devices 110, 120, and 130 may be configured to establish wireless connections directly with each other for wireless communications between the electronic devices.

The wireless communications may utilize protocols specified in one or more standards such as the Institute of Electrical and Electronics Engineers (IEEE) 802.11 family of standards (e.g., 802.11, 802.11a, 802.11b, 802.11n, 802.11g, 802.11ac, 802.11ad, 802.11af, 802.11ah, 802.11ai, 802.1 1aj, 802.11aq, 802.11ax, 802.11ay, 802.11ba, and/or 802.11be), each of which is available from "https://ieeexplore.ieee.org/" and is hereby incorporated herein by reference (e.g., including the 802.11ax-2021 standard as described in "IEEE Standard for Information Technology--Telecommunications and Information Exchange between Systems Local and Metropolitan Area Networks--Specific Requirements Part 11: Wireless LAN Medium Access Control (MAC) and Physical Layer (PHY) Specifications Amendment 1: Enhancements for High-Efficiency WLAN," in IEEE Std 802.11ax-2021 (Amendment to IEEE Std 802.11-2020), vol., no., pp.1-767, 19 May 2021, doi: 10.1109/IEEESTD.2021.9442429; the 802.11 standard as described in B. P. Crow, I. Widjaja, J. G. Kim and P. T. Sakai, "IEEE 802.11 Wireless Local Area Networks," in IEEE Communications Magazine, vol. 35, no. 9, pp. 116-126, Sept. 1997, doi: 10.1109/35.620533; the 802.11a standard as described in "IEEE Standard for Telecommunications and Information Exchange Between Systems - LAN/MAN Specific Requirements - Part 11: Wireless Medium Access Control (MAC) and physical layer (PHY) specifications: High Speed Physical Layer in the 5 GHz band," in IEEE Std 802.11a-1999 , vol., no., pp.1-102, 30 Dec. 1999, doi: 10.1109/IEEESTD. 1999.90606; the 802.11b standard as described in "IEEE Standard for Information Technology - Telecommunications and information exchange between systems - Local and Metropolitan networks - Specific requirements - Part 11: Wireless LAN Medium Access Control (MAC) and Physical Layer (PHY) specifications: Higher Speed Physical Layer (PHY) Extension in the 2.4 GHz band," in IEEE Std 802.11b-1999, vol., no., pp.1-96, 20 Jan. 2000, doi: 10.1109/IEEESTD.2000.90914; the 802.11n standard as described in "IEEE Standard for Information technology-- Local and metropolitan area networks-- Specific requirements-- Part 11: Wireless LAN Medium Access Control (MAC)and Physical Layer (PHY) Specifications Amendment 5: Enhancements for Higher Throughput," in IEEE Std 802.11n-2009 (Amendment to IEEE Std 802.11-2007 as amended by IEEE Std 802.11k-2008, IEEE Std 802.11r-2008, IEEE Std 802.11y-2008, and IEEE Std 802.11w-2009) , vol., no., pp.1-565, 29 Oct. 2009, doi: 10.1109/IEEESTD.2009.5307322; the 802.11g standard as described in "IEEE Standard for Information technology-- Local and metropolitan area networks-- Specific requirements-- Part 11: Wireless LAN Medium Access Control (MAC) and Physical Layer (PHY) Specifications: Further Higher Data Rate Extension in the 2.4 GHz Band," in IEEE Std 802.11g-2003 (Amendment to IEEE Std 802.11, 1999 Edn. (Reaff 2003) as amended by IEEE Stds 802.11a-1999, 802.11b-1999, 802.1 1b-1999/Cor 1-2001, and 802.11d-2001) , vol., no., pp.1-104, 27 June 2003, doi: 10.1109/IEEESTD.2003.94282; and/or the 802.11ac standard as described in "IEEE Standard for Information technology-- Telecommunications and information exchange between systemsLocal and metropolitan area networks-- Specific requirements--Part 11: Wireless LAN Medium Access Control (MAC) and Physical Layer (PHY) SpecificationsAmendment 4: Enhancements for Very High Throughput for Operation in Bands below 6 GHz.," in IEEE Std 802.11ac-2013 (Amendment to IEEE Std 802.11-2012, as amended by IEEE Std 802.1 1ae-2012, IEEE Std 802.11aa-2012, and IEEE Std 802.11ad-2012) , vol., no., pp.1-425, 18 Dec. 2013, doi: 10.1109/IEEESTD.2013.6687187, each of which is hereby incorporated herein by reference).

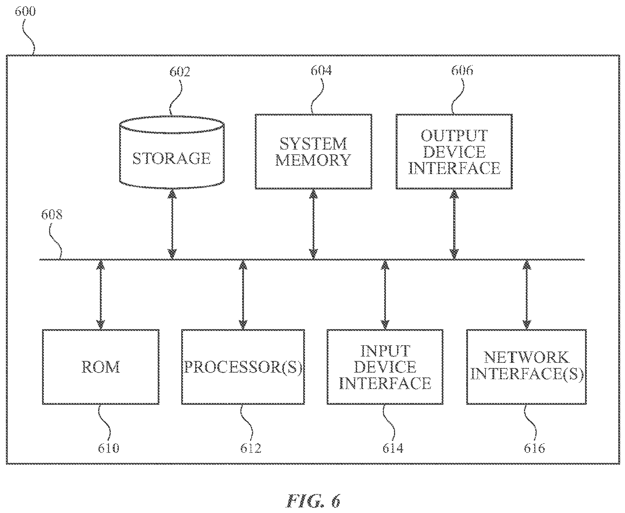

In FIG. 1, electronic device 110 is depicted as a computer, electronic device 120 is depicted as a laptop computer, and electronic device 130 is depicted as a smartphone. The subject technology is not limited to these types of electronic devices. For example, one or more of electronic devices 110, 120, or 130 may be a portable computing device such as a laptop computer, a smartphone, a peripheral device (e.g., headphones, earbuds, wireless speakers, and the like), a tablet device, a set-top box, a content streaming device, a wearable device such as a smartwatch, a gaming console, a smart television, and the like. The electronic devices also may represent sensors, switches, controllers, cameras, and other electronic devices considered to be part of an Internet of Things (IoT). Each of electronic devices 110, 120, and 130, as well as electronic device 140 (e.g., a base station/access point) may be, and/or may include all or part of, the electronic system discussed below with respect to FIG. 6.

FIG. 2 is a block diagram illustrating components of an electronic device according to aspects of the subject technology. Not all of the depicted components may be required, however, and one or more implementations may include additional components not shown in the figure. Variations in the arrangement and type of the components may be made without departing from the spirit or scope of the claims as set forth herein. Depicted or described connections or couplings between components are not limited to direct connections or direct couplings and may be implemented with one or more intervening components unless expressly stated otherwise.

In the example depicted in FIG. 2, electronic device 200 (which may be an implementation of any of the electronic devices 110, 120, 130 or 140 of FIG. 1) includes processor 210, wireless network interface 220, antenna 230, and memory 240. Processor 210 may include suitable logic, circuitry, and/or code that enable processing data and/or controlling operations of electronic device 200. In this regard, processor 210 may be enabled to provide control signals to various other components of electronic device 200. Processor 210 also may control transfers of data between various portions of electronic device 200. Additionally, processor 210 may enable implementation of an operating system or otherwise execute code to manage operations of electronic device 200.

Processor 210 or one or more portions thereof, may be implemented in software (e.g., instructions, subroutines, code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

Wireless network interface 220 may include suitable logic, circuitry, and/or code that enable the transmission and reception of data over one or more links between electronic device 200 and another electronic device using antenna 230. Wireless network interface 220 may include encoders, decoders, filters, analog-to-digital converters, digital-to-analog converters, power amplifiers, etc. Antenna 230 is depicted as being internal to electronic device 200 but may be implemented external to electronic device 200. While one antenna element is depicted in FIG. 2, electronic device 200 may be implemented using multiple antenna elements in any configuration. The subject technology is not limited to any particular type, number, or arrangement of antenna elements.

Memory 240 may include suitable logic, circuitry, and/or code that enable storage of various types of information such as received data, generated data, code, and/or configuration information. Memory 240 may include, for example, random access memory (RAM), read-only memory (ROM), flash memory, magnetic storage, optical storage, etc. As depicted in FIG. 2, memory 240 contains communication module 250. The subject technology is not limited to these components both in number and type, and may be implemented using more components or fewer components than are depicted in FIG. 2.

According to aspects of the subject technology, communication module 250 includes a computer program having one or more sequences of instructions or code together with associated data and settings. Upon processor 210 executing the instructions or code, one or more processes are initiated, for example, to establish and maintain one or more wireless communication links with other electronic devices via wireless network interface 220, determine which of several links to be used for transmission of data, and to facilitate communication of data (e.g., packets, frames, symbols, etc.) between electronic device 200 and one or more other electronic devices via wireless network interface 220.

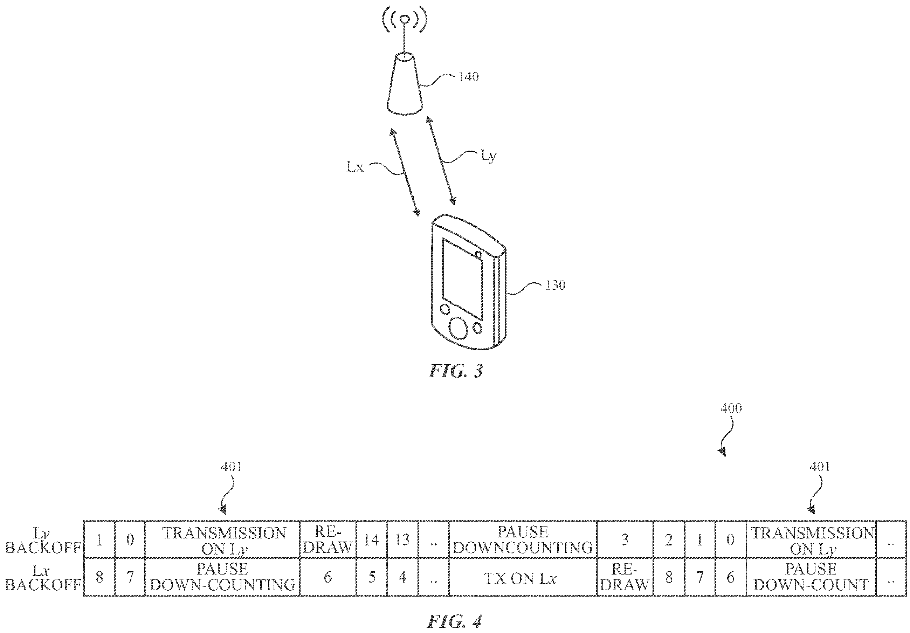

According to aspects of the subject technology, any or all of the electronic devices 110, 120, and 130 may be multi-link devices, such as NSTR devices that are configured to communicate with, for example, the electronic device 140 over multiple links. For example, FIG. 3 illustrates an example use case in which the electronic device 130 communicates (e.g., transmits and receives data) over two links, labeled link x (abbreviated to Lx) and link y (abbreviated to Lx) for purposes of the present discussion. The link Lx and/or the link Ly may each include one or more channels (e.g., such as WiFi channels) over which the electronic device 130 and the electronic device 140 have established a connection.

The figures and the following discussion include a number of abbreviations and acronyms. A legend is provided below for these acronyms:

Lx: Link x
Ly: Link y
$Reff$: Effective rate of Tx
$Rx, Ry$: Achievable rate on Lx and Ly respectively
$px, py$: probability of Tx on Lx and Ly respectively, where $px + py = 1$
$Tmax$: maximum allowed length of a transmission on a link
$t$: average length of a packet, in time, on Ly
$EBx, EBy$: wait time before back-off expires on Lx and Ly respectively
$r$: rate ratio = $Rx/Ry$
$Wx, Wy$: Wastage on Lx and Ly respectively

The effective rate, $Reff$, may be a computed data rate of an upcoming transmission. The achievable rates, $Rx$ and $Ry$, may be measured data rates on the links Lx and Ly respectively at a current time (e.g., measured over a preceding period of time leading up to the current time). The achievable rates, $Rx$ and $Ry$, may vary, as examples, based on respective signal-to-noise ratios (SNRs) on the links Lx and Ly, based on a number of devices (e.g., client devices or stations) transmitting and/or receiving data on the links Lx and Ly respectively, and/or an amount of data being transmitted and/or received over the on the links Lx and Ly respectively. The wait times, $EBx$ and $EBy$ may be expected wait times for back-off to expire on the respective links Lx and Ly. For example, wait times, $EBx$ and $EBy$ may be determined by measuring the average or median wait times before back-off expires over a preceding period of time (e.g., over a previous few seconds, one second or fraction of a second) on the links Lx and Ly respectively. The wastages, $Wx$ and $Wy$, may be known overheads for transmitting and/or receiving, for example, request to send (RTS), clear to send (CTS), and block acknowledgement (BACK) signals over the respective links Lx and Ly. For example, the overheads on the respective links Lx and Ly may be respective amounts of time (e.g., that are known a priori or measured over a preceding period of time) for transmitting an RTS, receiving a CTS, transmitting a block acknowledgement request, and/or receiving a BACK in association with a particular transmission on that link.

In one or more examples that are discussed herein, the link Lx may have a bandwidth that is greater than the bandwidth of the link Ly (e.g., by an integer multiple greater than one). However, in some exemplary use cases, congestion (e.g., caused by low signal-to-noise and/or multiple devices communicating on the same link) on the link Lx may cause the achievable data rate on link Lx to be reduced at some times. In accordance with aspects of the subject technology, the electronic device 130 may determine whether to transmit on the link Ly based on a rate ratio between the links Lx and Ly. For example, the rate ratio may be a ratio, $r$, of the achievable data rate $Rx$ on the link Lx to the achievable data rate $Ry$ on the link Ly (e.g., $r = Rx/Ry$). In one or more implementations, the achievable data rate $Rx$ may be a measured data rate on the link Lx over a preceding period of time (e.g., a preceding few seconds, second, or fraction of a second). In one or more implementations, the achievable data rate $Ry$ may be a measured data rate on the link Ly over a preceding period of time (e.g., a preceding few seconds, second, or fraction of a second). In other examples, the achievable data rates $Rx$ and $Ry$ may be reported to the electronic device 130 by the electronic device 140 (e.g., an access point).

In one or more implementations, the electronic device 130 may determine whether to transmit on the link Ly by comparing the rate ratio, $r$, to a threshold. For example, the threshold may be based on a wait time (e.g., $EBx$) for the link Lx. The threshold may also be based on a maximum transmission time (e.g., $Tmax$) for the link Ly. In one or more implementations, the threshold may also be based on an overhead (e.g., $Wy$) for transmissions on the link Ly.

For example, as discussed in further detail hereinafter, the threshold may be derived from a rate analysis (as described hereinafter in further detail), and may be a sum of a constant value (e.g., one) and a ratio of the wait time (e.g., $EBx$) to the maximum transmission time (e.g., $Tmax$), as shown in Equation 1 below:

$$\left( r < 1 + \frac{EBx}{Tmax} \right).$$

$$(1)$$

As another example, as discussed in further detail hereinafter, the threshold may be derived from a cost analysis, and may be a sum of a constant value (e.g., one) and a ratio of the wait time (e.g., $EBx$) to a sum of the maximum transmission time (e.g., $Tmax$) and the overhead (e.g., the wastage $Wy$) for the link Ly, as shown in Equation 2 below:

$$\frac{Rx}{Ry} < 1 + \frac{EBx}{(Tmax + Wy)}. \qquad (2)$$

Using a threshold as device, for example, by Eq. (1) or Eq. (2) above, the electronic device 130 can behave like a single link device on a link (e.g., Lx) having a significantly (e.g., as determined by the threshold) higher data rate than another link (e.g., Ly), and as an NSTR device transmitting on multiple links (e.g., Lx and Ly) when the data rates on the multiple links are similar (e.g., to within the threshold). In this way, the electronic device 130 can achieve the benefits (e.g., quick medium access) of NSTR, without creating scenarios in which the effective data rate when transmitting on multiple links is inferior to the best data rate of any one single link. It is appreciated that the benefits of the subject technology include, up to a threshold of congestion on a higher data rate link (e.g., Lx), not delaying the medium access time on the higher data rate link. Accordingly, in one or more implementations, if the electronic device 130 determines that the higher data rate link is already busy because of overlapping basic service set (OBSS) communications at the time that back-off on Ly expires, the electronic device 130 can transmit on the lower data rate link regardless of the rate ratio and/or threshold, as this transmission on the lower data rate link (when the higher data rate link is busy) incurs no loss and should be performed. In such a use case in which the higher rate data link is busy (e.g., the network allocation vector (NAV) is set for the link Lx), the electronic device 130 may transmit on Ly for a transmission length that is limited by the remaining NAV on Lx. A network allocation vector (NAV) may be a virtual carrier sensing mechanism that is implemented as, for example a counter that counts down to zero at a uniform rate across devices (e.g., according to the 802.11 standards). A NAV may be set when a MAC layer frame header of a frame obtained by a client device over a link contains a duration field is read by the client device, and a countdown timer is set by the client device according to the duration field. For example, the duration field may indicate an amount of time (e.g., a number of microseconds) during which a transmitting device of the MAC layer frame intends to hold the medium/link busy. In one or more implementations, a client device/station may hold the medium/link busy for a maximum allowed transmission time (e.g., *Tmax*, such as 32,767 microseconds) that is defined by a network protocol standard (e.g., 802.11). When the counter value is non-zero, the client device determines that the medium/link is busy, and when the counter value decrements to zero, the client device determines that the medium/link is idle.

As noted above, the threshold for determining whether to transmit on the link Ly when the link Lx is not busy can be derived from a rate analysis or a cost analysis, in various implementations.

In the rate analysis, for NSTR, the rate equation can be written (ignoring overheads for this portion of the analysis) as shown in Equation 3 below:

$$R_{eff} = \frac{Rx.Tmax.px + Ry.t.py}{(Tmax + EBx).px + t.py} , \qquad (3)$$

where *Rx, Tmax, px, Ry, t, py,* and *EBx* are defined above. Since the back-off down counting on two links happens in parallel, only one of expected back-off of Lx and Ly makes into the equation. The expected back-off, *EBx,* of the link Lx is used in Eq. (3), which considers a constant transmission duration in a link. Eq. (3) above can be rewritten as Equation (4) below:

$$R_{eff} = Ry + Ry.\frac{(r - 1)Tmax - EBx}{Tmax + t.\frac{py}{px} + EBx} , \qquad (4)$$

which, for a rate ratio, *r = Rx/Ry* results in a condition on the length of time, *t,* for transmission on the link Ly as shown in Equation (5) below:

$$t = Tmax \ if \ (r < 1 + \frac{EBx}{Tmax})$$
$$0 \qquad o.w. \qquad\qquad . \qquad (5)$$

According to Eq. (5), the length, *t,* of the transmission on Ly should be *Tmax* if the rate ratio, *r,* is less than a threshold of (1 + *EBx/Tmax,* as expressed in Eq. (1) above), and zero (e.g., transmission on Ly should not be performed) if the rate ratio is greater than the threshold (e.g., otherwise, or "o.w." in Eq. (5)). In other words, if the rate ratio is greater than the threshold expressed in Eq. (1), the electronic device transmits on Lx (e.g., if Lx is not busy at the time the comparison of the rate ratio and the threshold is performed, such as when back-off expires on the link Ly).

Turning now to a cost analysis, at the slot edge when back-off is won on Ly, possible options include (i) a transmission with rate *Ry* for a duration of *t = Ty* on link Ly, or (ii) a transmission with rate *Rx* can be made for a duration of *Tx* on link Lx. A transmission with rate *Ry* for a duration of *t = Ty* on link Ly will encounter a wastage (e.g., overhead) duration of *Wy* due to transmission of the multi-user request-to-send (MU-RTS), clear-to-send (CTS) and block acknowledgement (BACK) on Ly. A transmission with rate *Rx* for a duration of *Tx* on link Lx will encounter a wastage (e.g., overhead) duration of Wx due to transmission of the multi-user request to send (MU-RTS), clear to send (CTS) and block acknowledgement (BACK) on Lx. Setting aside, for the present discussion, a use case in which the link Lx is busy at the slot edge when back-off is won on Ly, the back-off characteristics of Lx will remain roughly same before and after this transmission on Ly (since back-off occurs in parallel on Lx and Ly).

Since the back-off characteristics remains unchanged, a virtual timeline, such as the virtual timeline 400 of FIG 4 can be helpful for the cost analysis. For example, the virtual timeline 400 illustrates the backoff characteristics of the link Lx and the link Ly. The virtual timeline 400 may be generated independently of the probability of transmission on Ly and the length of transmission *Ty.*

In the example of FIG. 4, the virtual timeline 400 indicates continuous transmissions 401 on Ly without any back-off. Alternatively, if transmission on Ly was not made, of the continuous transmissions 401 on Ly could have been used for Lx transmissions. As shown, during the continuous transmission 401 on Ly, the back-off down-counting on Lx is paused. The statistics of Lx transmission in this example timeline may remain the same as outside this example timeline.

In the virtual timeline 400, the amount of data pushed if a transmission is made on Ly can be expressed as $N \cdot Ry \cdot Ty$, wherein $Ry$ and $Ty$ are defined above, and $N$ is the number of transmissions on Ly over the entire timeline. Alternatively, if Lx was used for transmission, the data that could have been pushed is $M \cdot Rx \cdot Tx$, wherein $M$ is the number of transmissions on Lx, if Lx was used over this entire timeline. In this example, transmission on Ly may be advantageous if $N \cdot Ry \cdot Ty$ is greater than $M \cdot Rx \cdot Tx$.

Noting that $N \cdot (Ty + Wy) = M \cdot (EBx + Tx + Wx)$, the condition that $N \cdot Ry \cdot Ty$ is greater than $M \cdot Rx \cdot Tx$ can be rewritten as a condition to transmit on Ly when the rate ratio, $r = Rx/Ry$, satisfies Equation (6) below:

$$\frac{Rx}{Ry} \; < \; \frac{Ty}{Tx} \cdot \frac{EBx + T_x + W_x}{T_y + W_y}. \qquad (6)$$

Setting (e.g., for enhanced efficiency) $Tx$ and $Ty$ to $Tmax$, and noting that $Wx$ and $Wy$ should be similar, the condition of Eq. (6) can be expressed as shown in Eq. (7) below:

$$\frac{Rx}{Ry} \; < \; 1 + \frac{EBx}{(Tmax + Wy)}, \qquad (7)$$

which is the same as Eq. (2) above, and which includes a threshold that is similar to the threshold of Eq. (1) above, except for the presence of the wastage (e.g., overhead) Wy in the denominator of the threshold.

In one or more implementations, an electronic device, such as the electronic device 130, may determine which of multiple links on which to transmit data by comparing a rate ratio (e.g., $r = Rx/Ry$) to a threshold that is based on a wait time (e.g., the expected wait time $EBx$), a maximum transmission time (e.g., $Tmax$), and/or an overhead (e.g., $Wy$). The threshold may be defined by, for example, Eq. (1) or Eq. (2) above. Determining which of multiple links on which to transmit data by comparing a rate ratio to a threshold as described herein can provide a technical solution to the technical problem of reduced effective data rates in NSTR communication, particularly, for example, when the effective data rates of the multiple links are different by more than an amount corresponding to the threshold.

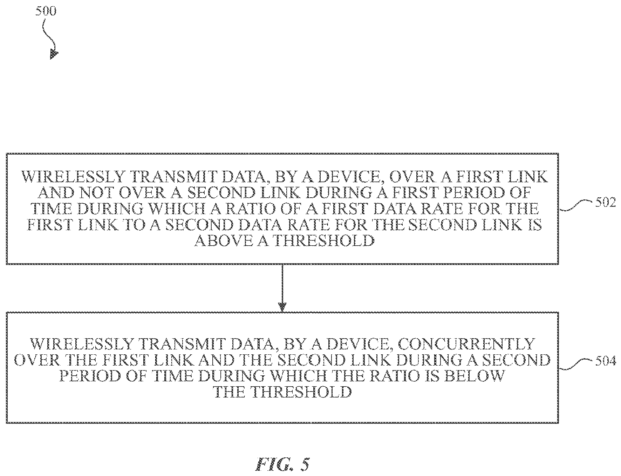

FIG. 5 is a flowchart illustrating an example process for multi-link communication based, at least in part, on determining which of multiple links on which to transmit data according to aspects of the subject technology. For explanatory purposes, the blocks of the process illustrated in FIG. 5 are described herein as occurring in serial, or linearly. However, multiple blocks of the process may occur in parallel. In addition, the blocks of the process need not be performed in the order shown and/or one or more blocks of the process need not be performed and/or can be replaced by other operations.

Process 500 depicted in FIG. 5 includes, at block 502, wirelessly transmitting data, by a device (e.g., electronic device 130), over a first link (e.g., link Lx) and not over a second link (e.g., link Ly) during a first period of time during which a ratio (e.g., $r$) of a first data rate (e.g., $Rx$) for the first link to a second data rate (e.g., $Ry$) for the second link is above a threshold. For example, the threshold may be based on a wait time (e.g., $EBx$) for the first link (e.g., as in Eq. (1) or Eq. (2) above). The threshold may also be based on a maximum transmission time (e.g., $Tmax$) for the first link (e.g., as in Eq. (1) or Eq. (2) above). For example, the threshold may be a sum of a constant value (e.g., one) and a ratio of the wait time to the maximum transmission time (e.g., as in Eq. (1) above). In one or more implementations, the threshold may also be based on an overhead (e.g., $Wy$) for transmissions on the second link (e.g., as in Eq. (2) above). For example, the threshold may be a sum of a constant value (e.g., one) and a ratio of the wait time to a sum of the maximum transmission time and the overhead (e.g., as in Eq. (2) above).

At block 504, the process 500 includes wirelessly transmitting data, by the device, concurrently over the first link and the second link during a second period of time during which the ratio is below the threshold. In one or more implementations, wirelessly transmitting the data concurrently over the first link and the second link during the second period of time during which the ratio is below the threshold may include transmitting a portion of the data over the second link for a maximum allowed transmission time (e.g., $Tmax$, which may be a maximum amount of time allowed for a single transmission without again contending for medium access, such as a maximum amount of time (e.g., 32,767 microseconds) that is defined in the 802.11 standard) for the second link. For example, transmitting data concurrently over the first link and the second link may include transmitting data over the first link while data is being transmitted over the second link and/or transmitting data over the second link while data is being transmitted over the first link. In various use cases, transmitting data concurrently over the first link and the second link may include transmitting data over the first link for an entire amount of time that data is transmitted over the second link within the second period of time, transmitting data over the first link for a portion of the amount of time data is transmitted over the second link within the second period of time, transmitting data over the second link for an entire amount of time that data is transmitted over the first link within the second period of time, or transmitting data over the second link for a portion of the amount of time data is transmitted over the first link within the second period of time. In one or more implementations, the device may determine (e.g., by comparing the ratio to the threshold) whether to wirelessly transmit the data over only the first link, over the second, link, or over both the first link and the second link, at a time when a back-off countdown for the second link expires.

In one or more implementations, the process 500 may also include wirelessly transmitting data, by the device, over the second link during a third period of time during which the ratio is above the threshold and a network allocation vector (NAV) for the first link is set. For example, wirelessly transmitting the data, by the device, over the second link during the third period of time during which the ratio is above the threshold and the network allocation vector for the first link is set may include wirelessly transmitting the data over the second link for a duration of a timer for the network allocation vector. For example, the timer for the network allocation vector may be a countdown timer that is set by the device to a duration obtained from a MAC layer frame header of a transmission from another device over the first link, and decremented by the device until the countdown timer reaches zero, indicating that the first link is idle.

In one or more implementations, the process 500 may also include wirelessly transmitting data, by the device, over the second link during a fourth period of time during which the ratio is above the threshold and the network allocation vector for the first link is not set. For example, wirelessly transmitting the data, by the device, over the second link during the fourth period of time during which the ratio is above the threshold and the network allocation vector for the first link is not set may include transmitting the data over the second link for an expected amount of time for transmission of the data. For example, the expected amount of time for transmission of data may be an amount of time for transmitting the data at an expected data rate for a link. For example, the data rate for a link may be a data rate (e.g., an average data rate) measured on the link over a preceding period of time (e.g., a preceding second, preceding several second, or preceding fraction of a second).

In one or more implementations, operating an electronic device, such as the electronic device 130 to perform some or all of the process 500 can result in the electronic device performing single link transmission on a wider bandwidth link while congestion on that wider bandwidth link is low, and, as the congestion on that wider bandwidth link increases, abruptly (e.g., when the rate ratio satisfies a threshold as described herein) switching to multi-link (e.g., NSTR) transmission over the wider bandwidth link and a relatively lower bandwidth link.

Aspects of the subject technology can help to ensure that ensure that the performance of any scheme of NSTR does not become inferior (e.g., in terms of effective data rate or throughput) to the best of the two available single links. Although examples are described herein in which an NSTR device determines which of multiple links on which to transmit data by comparing a rate ratio of effective rates on the multiple links to a threshold, one or more devices may determine which of multiple links on which to transmit data by comparing a rate ratio of effective rates on the multiple links to a threshold in any communication operation (e.g., non NSTR operations) that can (e.g., continuously) monitor the achieved throughput one multiple links and adjust the probability of transmission on a link periodically to converge on a determination of which link on which to transmit that does not reduce the achieved throughput relative to the throughput of a single one of the links.

FIG. 6 illustrates an electronic system 600 with which one or more implementations of the subject technology may be implemented. The electronic system 600 may include various types of computer readable media and interfaces for various other types of computer readable media. The electronic system 600 includes a bus 608, one or more processing unit(s) 612, a system memory 604 (and/or buffer), a ROM 610, a permanent storage device 602, an input device interface 614, an output device interface 606, and one or more network interfaces 616, or subsets and variations thereof.

The bus 608 collectively represents all system, peripheral, and chipset buses that communicatively connect the numerous internal devices of the electronic system 600. In one or more implementations, the bus 608 communicatively connects the one or more processing unit(s) 612 with the ROM 610, the system memory 604, and the permanent storage device 602. From these various memory units, the one or more processing unit(s) 612 retrieves instructions to execute and data to process in order to execute the processes of the subject disclosure. The one or more processing unit(s) 612 can be a single processor or a multi-core processor in different implementations.

The ROM 610 stores static data and instructions that are needed by the one or more processing unit(s) 612 and other modules of the electronic system 600. The permanent storage device 602, on the other hand, may be a read-and-write memory device. The permanent storage device 602 may be a non-volatile memory unit that stores instructions and data even when the electronic system 600 is off. In one or more implementations, a mass-storage device (such as a magnetic or optical disk and its corresponding disk drive) may be used as the permanent storage device 602.

In one or more implementations, a removable storage device (such as a floppy disk, flash drive, and its corresponding disk drive) may be used as the permanent storage device 602. Like the permanent storage device 602, the system memory 604 may be a read-and-write memory device. However, unlike the permanent storage device 602, the system memory 604 may be a volatile read-and-write memory, such as random access memory. The system memory 604 may store any of the instructions and data that one or more processing unit(s) 612 may need at runtime. In one or more implementations, the processes of the subject disclosure are stored in the system memory 604, the permanent storage device 602, and/or the ROM 610. From these various memory units, the one or more processing unit(s) 612 retrieves instructions to execute and data to process in order to execute the processes of one or more implementations.

The bus 608 also connects to the input and output device interfaces 614 and 606. The input device interface 614 enables a user to communicate information and select commands to the electronic system 600. Input devices that may be used with the input device interface 614 may include, for example, alphanumeric keyboards and pointing devices (also called "cursor control devices"). The output device interface 606 may enable, for example, the display of images generated by electronic system 600. Output devices that may be used with the output device interface 606 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 6, the bus 608 also couples the electronic system 600 to one or more networks and/or to one or more network nodes through the one or more network interface(s) 616. In this manner, the electronic system 600 can be a part of a network of computers (such as a LAN, a wide area network ("WAN"), or an Intranet, or a network of networks, such as the Internet. Any or all components of the electronic system 600 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

**Claims**

1. A device, comprising:

a memory; and
processing circuitry configured to perform operations comprising:

wirelessly transmitting data, by the device, over a first link and not over a second link during a first period of time during which a ratio of a first data rate for the first link to a second data rate for the second link is above a threshold; and

wirelessly transmitting data, by the device, concurrently over the first link and the second link during a second period of time during which the ratio is below the threshold.

2. The device of claim 1, wherein
wirelessly transmitting the data concurrently over the first link and the second link during the second period of time during which the ratio is below the threshold comprises transmitting a portion of the data over the second link for a maximum allowed transmission time for the second link.

3. The device of claim 2, the operations further comprising:
wirelessly transmitting data, by the device, over the second link during a third period of time during which the ratio is above the threshold and a network allocation vector for the first link is set.

4. The device of claim 3, wherein
wirelessly transmitting the data, by the device, over the second link during the third period of time during which the ratio is above the threshold and the network allocation vector for the first link is set comprises wirelessly transmitting the data over the second link for a duration of a timer for the network allocation vector.

5. The device of claim 4, the operations further comprising:
wirelessly transmitting data, by the device, over the second link during a fourth period of time during which the ratio is above the threshold and the network allocation vector for the first link is not set.

6. The device of claim 5, wherein
wirelessly transmitting the data, by the device, over the second link during the fourth period of time during which the ratio is above the threshold and the network allocation vector for the first link is not set comprises transmitting the data over the second link for an expected amount of time for transmission of the data.

7. The device of any one of claim 1 to 6, wherein
the threshold is based on a wait time for the first link.

8. The device of claim 7, wherein
the threshold is further based on a maximum allowed transmission time for the first link.

9. The device of claim 8, wherein
the threshold is further based on an overhead for transmissions on the second link.

10. The device of claim 9, wherein
the threshold comprises a sum of a constant value and a ratio of the wait time to a sum of the maximum allowed transmission time and the overhead.

11. A system, comprising:
at least one electronic device having one or more processors configured to:

wirelessly transmit data over a first link and not over a second link during a first period of time during which a ratio of a first data rate for the first link to a second data rate for the second link is above a threshold; and
wirelessly transmit data concurrently over the first link and the second link during a second period of time during which the ratio is below the threshold.

12. The system of claim 11, wherein
the one or more processors are configured to wirelessly transmit the data concurrently over the first link and the second link during the second period of time during which the ratio is below the threshold by transmitting a portion of the data over the second link for a maximum allowed transmission time (Tx)) for the second link.

13. The system of claim 12, wherein
the one or more processors are further configured to:
wirelessly transmit data over the second link during a third period of time during which the ratio is above the threshold and a network allocation vector for the first link is set.

14. The system of claim 13, wherein

the one or more processors are further configured to
wirelessly transmit the data over the second link during the third period of time during which the ratio is above the threshold and the network allocation vector for the first link is set by wirelessly transmitting the data over the second link for a duration of a timer for the network allocation vector;
wherein in particular
the one or more processors are further configured to:
wirelessly transmit data over the second link during a fourth period of time during which the ratio is above the threshold and the network allocation vector for the first link is not set.

15. A non-transitory machine-readable medium storing instructions which, when executed by one or more processors, cause the one or more processors to:

wirelessly transmit data, by a device, over a first link and not over a second link during a first period of time during which a ratio of a first data rate for the first link to a second data rate for the second link is above a threshold; and
wirelessly transmit data, by the device, concurrently over the first link and the second link during a second period of time during which the ratio is below the threshold.

100

110

120

140

130

*FIG. 1*

ELECTRONIC DEVICE

200

210
PROCESSOR

220
WIRELESS NETWORK INTERFACE

240
MEMORY

250
COMMUNICATION MODULE

230

*FIG. 2*

*FIG. 3*

| | | | | | | | | | | | | | |
|---|---|---|---|---|---|---|---|---|---|---|---|---|---|
| Ly BACKOFF | 1 | 0 | TRANSMISSION ON Ly | RE-DRAW | 14 | 13 | .. | PAUSE DOWNCOUNTING | 3 | 2 | 1 | 0 | TRANSMISSION ON Ly | .. |
| Lx BACKOFF | 8 | 7 | PAUSE DOWN-COUNTING | 6 | 5 | 4 | .. | TX ON Lx | RE-DRAW | 8 | 7 | 6 | PAUSE DOWN-COUNT | .. |

*FIG. 4*

500

WIRELESSLY TRANSMIT DATA, BY A DEVICE, OVER A FIRST LINK
AND NOT OVER A SECOND LINK DURING A FIRST PERIOD OF
TIME DURING WHICH A RATIO OF A FIRST DATA RATE FOR THE
FIRST LINK TO A SECOND DATA RATE FOR THE SECOND LINK IS
ABOVE A THRESHOLD

502

WIRELESSLY TRANSMIT DATA, BY A DEVICE, CONCURRENTLY
OVER THE FIRST LINK AND THE SECOND LINK DURING A SECOND
PERIOD OF TIME DURING WHICH THE RATIO IS BELOW
THE THRESHOLD

504

*FIG. 5*

600

602            604            606

STORAGE

SYSTEM MEMORY

OUTPUT DEVICE INTERFACE

608

ROM

PROCESSOR(S)

INPUT DEVICE INTERFACE

NETWORK INTERFACE(S)

610            612            614            616

*FIG. 6*

Europäisches
Patentamt

European
Patent Office

Office européen
des brevets

# EUROPEAN SEARCH REPORT

Application Number

EP 23 20 8994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/223683 A1 (HUAWEI TECH CO LTD [CN]) 11 November 2021 (2021-11-11) * the whole document * & EP 4 142 314 A1 (HUAWEI TECH CO LTD [CN]) 1 March 2023 (2023-03-01) * figures 4A, 4B, 4C, 5B * * paragraph [0171] * | 1-15 | INV. H04W84/02 H04W28/08 |
| A | ADHIKARI SHUBHODEEP ET AL: "Analysis of Multilink in IEEE 802.11be", IEEE COMMUNICATIONS STANDARDS MAGAZINE, IEEE, vol. 6, no. 3, 1 September 2022 (2022-09-01), pages 52-58, XP011924670, ISSN: 2471-2825, DOI: 10.1109/MCOMSTD.0001.2100086 [retrieved on 2022-10-21] * Page 52-53, section "Different Multilink Modes in 802.11be", fig. 2 (3) * | 1-15 | |

|  |  |  | TECHNICAL FIELDS SEARCHED (IPC) |
|---|---|---|---|
|  |  |  | H04W H04L |

The present search report has been drawn up for all claims

| Place of search | Date of completion of the search | Examiner |
|---|---|---|
| Berlin | 15 March 2024 | Siebel, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 8994

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | | Publication date | Patent family member(s) | Publication date |
|---|---|---|---|---|
| WO 2021223683 A1 | | 11-11-2021 | BR 112022022584 A2 | 13-12-2022 |
| | | | CN 113630725 A | 09-11-2021 |
| | | | CN 116546442 A | 04-08-2023 |
| | | | EP 4142314 A1 | 01-03-2023 |
| | | | US 2023082270 A1 | 16-03-2023 |
| | | | WO 2021223683 A1 | 11-11-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IEEE Standard for Information Technology--Telecommunications and Information Exchange between Systems Local and Metropolitan Area Networks--Specific Requirements Part 11: Wireless LAN Medium Access Control (MAC) and Physical Layer (PHY) Specifications Amendment 1: Enhancements for High-Efficiency WLAN. *IEEE Std 802.11ax-2021 (Amendment to IEEE Std 802.11-2020),* 19 May 2021, 1-767
- **B. P. CROW ; I. WIDJAJA ; J. G. KIM ; P. T. SAKAI.** IEEE 802.11 Wireless Local Area Networks. *IEEE Communications Magazine,* September 1997, vol. 35 (9), 116-126
- IEEE Standard for Telecommunications and Information Exchange Between Systems - LAN/MAN Specific Requirements - Part 11: Wireless Medium Access Control (MAC) and physical layer (PHY) specifications: High Speed Physical Layer in the 5 GHz band. *IEEE Std 802.11a-1999,* 30 December 1999, 1-102
- IEEE Standard for Information Technology - Telecommunications and information exchange between systems - Local and Metropolitan networks - Specific requirements - Part 11: Wireless LAN Medium Access Control (MAC) and Physical Layer (PHY) specifications: Higher Speed Physical Layer (PHY) Extension in the 2.4 GHz band. *IEEE Std 802.11b-1999,* 20 January 2000, 1-96
- IEEE Standard for Information technology-- Local and metropolitan area networks-- Specific requirements-- Part 11: Wireless LAN Medium Access Control (MAC)and Physical Layer (PHY) Specifications Amendment 5: Enhancements for Higher Throughput. *IEEE Std 802.11n-2009 (Amendment to IEEE Std 802.11-2007 as amended by IEEE Std 802.11k-2008, IEEE Std 802.11r-2008, IEEE Std 802.11y-2008, and IEEE Std 802.11w-2009),* 29 October 2009, 1-565
- IEEE Standard for Information technology-- Local and metropolitan area networks-- Specific requirements-- Part 11: Wireless LAN Medium Access Control (MAC) and Physical Layer (PHY) Specifications: Further Higher Data Rate Extension in the 2.4 GHz Band. *IEEE Std 802.11g-2003 (Amendment to IEEE Std 802.11, 1999 Edn. (Reaff 2003) as amended by IEEE Stds 802.11a-1999, 802.11b-1999, 802.11b-1999/Cor 1-2001, and 802.11d-2001),* 27 June 2003, 1-104
- IEEE Standard for Information technology-- Telecommunications and information exchange between systemsLocal and metropolitan area networks-- Specific requirements--Part 11: Wireless LAN Medium Access Control (MAC) and Physical Layer (PHY) SpecificationsAmendment 4: Enhancements for Very High Throughput for Operation in Bands below 6 GHz. *IEEE Std 802.11ac-2013 (Amendment to IEEE Std 802.11-2012, as amended by IEEE Std 802.11ae-2012, IEEE Std 802.11aa-2012, and IEEE Std 802.11ad-2012),* 18 December 2013, 1-425